(19) Europäisches Patentamt / European Patent Office / Office européen des brevets

(11) EP 2 592 106 A1

(12) **EUROPEAN PATENT APPLICATION**

(43) Date of publication:
**15.05.2013 Bulletin 2013/20**

(21) Application number: **12007496.8**

(22) Date of filing: **31.10.2012**

(51) Int Cl.:
***C08J 5/18*** (2006.01) ***C08L 1/12*** (2006.01)
***C08K 5/10*** (2006.01) *G02B 5/30* (2006.01)
*G02F 1/1335* (2006.01)

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **08.11.2011 KR 20110115556**

(71) Applicant: **SK Innovation Co., Ltd.**
**Jongno-gu**
**Seoul**
**110-110 (KR)**

(72) Inventors:
- **Lee, Sang Yeup**
  **305-712 Daejeon (KR)**
- **Lee, Hye Jin**
  **305-712 Daejeon (KR)**
- **Kim, Ki Yup**
  **305-793 Daejeon (KR)**
- **Cho, Yong Gyun**
  **305-707 Daejeon (KR)**

(74) Representative: **Zinnecker, Armin et al**
**LORENZ SEIDLER GOSSEL**
**Rechtsanwälte - Patentanwälte**
**Widenmayerstrasse 23**
**80538 München (DE)**

# (54) Cellulose acylate film

(57) Provided is a cellulose acylate film. More particularly, the present invention relates to a cellulose acylate film having a low light scattering efficiency (haze).

EP 2 592 106 A1

## Description

CROSS-REFERENCE TO RELATED APPLICATIONS

This application claims priority under 35 U.S.C. §119 to Korean Patent Application No.10-2011-0115556, filed on November 8, 2011, in the Korean Intellectual Property Office, the disclosure of which is incorporated herein by reference in its entirety.

TECHNICAL FIELD

The following disclosure relates to a cellulose acylate film. More particularly, the present invention relates to a cellulose acylate film having a low light scattering efficiency (haze).

BACKGROUND

Since a cellulose acylate film has strong strength and flame resistance, the cellulose acylate film is used in various photographs or optical materials. The cellulose acylate film has low optical anisotropy as compared with other polymer films to provide relatively low retardation. Therefore, the cellulose acylate film has been used in a polarizer, or the like.

Recently, as the demand for high function such as image quality enhancement has been increased in a liquid crystal display (LCD), characteristics satisfying this demand have been also demanded in the cellulose acylate film for a polarizer, which is a material of the LCD.

However, the haze of the cellulose acylate film tends to be increased according to the used additive in a stretching process, and as a result, frontal contrast may be deteriorated.

Therefore, in order to reduce the haze of cellulose acylate film, a method of manufacturing a cellulose ester film by controlling elongation and a temperature at the time of stretching to prevent the haze from being increased has been disclosed in Japanese Patent Laid-open Publication No. 2008-213469.

However, this method has a limitation in a control. Therefore, the present inventors tried to control the additive to manufacture a cellulose acylate film having a low haze.

[Related Art Document]

[Patent Document]

Japanese Patent Laid-open Publication No. 2008-213469 (2008.09.18)

SUMMARY

An embodiment of the present invention is directed to providing a cellulose acylate film of which a light scattering efficiency (haze) is 0.3% or less when the film is stretched by 10 to 30% and is slightly increased by ±0.001 to 0.2% as compared with the haze before stretching.

In addition, another embodiment of the present invention is directed to providing a liquid crystal display having a high contrast ratio without image quality distortion using the cellulose acylate film.

In one general aspect of the present invention, there is provided a cellulose acylate film having a low haze.

The present inventors studied in order to solve the problem that a cellulose acetate film is not appropriate for an optical film due to a rapid increase in a haze thereof after stretching to discover that the light scattering efficiency (haze) of the cellulose acylate optical film is generated by a difference in solubility between an additive and a cellulose acylate polymer, and a difference in a reflective index generated in an internal microstructure of the cellulose acylate film, and particularly, an increase in the haze at the time of stretching is significantly caused by crystallization of the additive due to polymer stretching unlike a general polymer film, thereby completing the present invention.

The present invention relates to the cellulose acylate film having a low haze even after stretching by improving the solubility with the polymer in the cellulose acylate film, compensating the difference in refractive index generated in the internal microstructure, and suppressing the crystallization due to the stretching.

More specifically, the present invention relates to the cellulose acylate film containing an additive that is a liquid state at room temperature, has a melting point of -50 to 50°C, a boiling point of 300°C or higher, and its own refractive index of 1.4 to 1.6.

Preferably, the cellulose acylate film may have a haze satisfying the following Equation 1 before stretching and a haze satisfying the following Equation 2 after stretching by 10 to 30%, and a difference between the haze before

stretching and the haze after stretching may satisfy the following Equation 3.

[Equation 1]

A haze of the film before stretching (Hi) ≤ 0.3%

[Equation 2]

A haze of the film after stretching by 10 to 30% (Hs) ≤ 0.3%

[Equation 3]

$$Hs = Hi \pm (0.001 \sim 0.2\ \%)$$

In the equation, Hs is a haze after stretching by 10 to 30%, and Hi is a haze before stretching.

The additive may be preferably selected from the compounds of the following Chemical Formula 1.

[Chemical Formula 1]

$R_1$- $(R_3)_a$-$L_1$- $(R_5)_b$- $(L_2)_c$- $(R_4)_d$-$R_2$

In Chemical Formula 1, $R_1$ is selected from (C1-C50)alkyl, (C6-C20)aryl, (C3-C20)cycloalkyl, (C2-C7)alkenyl, (C6-C20)aryl(C1-C20)alkyl, (C1-C50)heteroalkyl containing at least one atom selected from N, O, and S, 5- through 7-membered - heterocycloalkyl containing at least one atom selected from N, O, and S, and (C4-C20)heteroaryl containing at least one atom selected from N, O, and S,

$L_1$ and $L_2$ are each independently a connecting group selected from ester, amide, ether, urea, thioester, carboxyl, and carbamate,

$R_2$ is selected from (C1-C50) alkyl, (C6-C20)aryl, (C3-C20)cycloalkyl, (C2-C7)alkenyl, (C6-C20)aryl(C1-C20) alkyl, (C1-C50)heteroalkyl containing at least one atom selected from N, O, and S, 5- through 7-membered -heterocycloalkyl containing at least one atom selected from N, O, and S, and (C4-C20)heteroaryl containing at least one atom selected from N, O, and S,

$R_3$, $R_4$, and $R_5$ are each independently selected from (C1-C50)alkylene, (C6-C20)arylene, (C1-C50)heteroalkylene containing at least one atom selected from N, O, and S, and (C4-C20)heteroarylene containing at least one atom selected from N, O, and S,

alkyl, aryl, cycloalkyl, alkenyl, arylalkyl, heteroalkyl, heterocycloalkyl, heteroaryl of $R_1$, $R_2$, $R_3$, $R_4$, and $R_5$ may be further substituted with (C1-C50)alkyl, (C6-C20)aryl, (C3-C20)cycloalkyl, (C2-C7)alkenyl, (C6-C20)aryl(C1-C20)alkyl, (C1-C50)heteroalkyl containing at least one atom selected from N, O, and S, 5- through 7-membered -heterocycloalkyl containing at least one atom selected from N, O, and S, and (C4-C20)heteroaryl containing at least one atom selected from N, O, and S, and

a, b, c, and d are each independently 0 or 1.

The compound of Chemical Formula 1 may be selected from the following compounds.

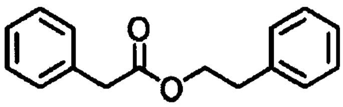

,

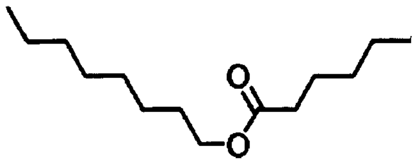

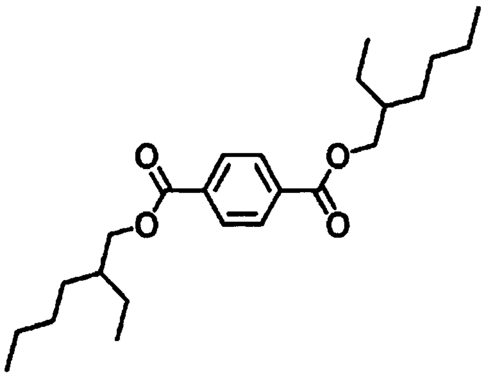

As a result of analyzing X-ray diffraction (XRD), a peak indicating crystallization does not appear in the cellulose acylate film.

The present invention provides a polarizer including the cellulose acylate film.

In addition the present invention provides a liquid crystal display including the polarizer.

Hereinafter, the present invention will be described in more detail.

Preferably, in the cellulose acylate film according to the present invention, one sheet of the film may have a haze satisfying the following Equation 1 before stretching and a haze satisfying the following Equation 2 after stretching by 10 to 30%, and a difference between the haze before stretching and the haze after stretching may satisfy the following Equation 3.

[Equation 1]

The haze of the film before stretching (Hi) $\leq$ 0.3%

[Equation 2]

The haze of the film after stretching by 10 to 30% (Hs) $\leq$ 0.3%

[Equation 3]

$$Hs = Hi \pm (0.001 \sim 0.2\ \%)$$

In the equation, Hs is the haze after stretching by 10 to 30%, and Hi is the haze before stretching.

In the present invention, the term "haze" is a value (%) measured using a haze meter (model name: HM-150, Japan, Murakami Color Research Lab.) according to JIS K 7136.

In the case in which the light scattering efficiency (haze) is higher than 0.3%, light from the liquid crystal display is scattered to reduce transmissivity, and as a result, contrast of the liquid crystal display may be reduced. Therefore, the lower the light scattering efficiency is, the better, and more specifically, the haze before stretching and the haze after

stretching are preferably in a range of 0.1 to 0.3% in one sheet of film.

The present invention may provide the cellulose acylate film of which the haze is slightly increased by ±0.001 to 0.2% as compared with the haze before stretching as the above Equation 3 by containing an additive being a liquid state at room temperature and having a melting point of -50 to 50°C, a boiling point of 300°C or higher, and its own refractive index of 1.4 to 1.6.

According to the present invention, in the cellulose acylate, all or some of the hydrogen atoms of the hydroxyl groups at the second, third, and sixth positions of glucose units configuring cellulose are substituted with an acetyl group. The substitution degree is preferably 2.4 to 2.9, and more preferably, 2.7 to 2.9. The substitution degree may be measured according to ASTM: D-817-91.

According to the present invention, a range of molecular weight of a cellulose acylate resin is not limited, but a weight-average molecular weight thereof is preferably in a range of 200,000 to 350,000. Further, a molecular weight distribution Mw/Mn (Mw is a weight-average of molecular weight, and Mn is a number-average molecular weight) of the cellulose acylate resin is preferably 1.4 to 1.8, and more preferably, 1.5 to 1.7.

According to the present invention, the additive should be present as a liquid state at room temperature, and preferably, does not have ion bond sites and hydrogen bond sites that are a significantly high polarity in order to prevent solidification caused by strong intermolecular bonds. In addition, although the additive may include the connecting group such as ester, amide, ether, urea, thioester, carboxyl, carbamate, or the like, which have a low polarity, in the case in which the number of connecting group increases, it is highly likely that the additive is solidified, solubility thereof in cellulose acylate may be decreased, and the cost may be increased.

In order to improve productability of the cellulose acylate film, the additive may satisfy the following physical properties: the melting point is -50 to 50°C, the boiling point is 300°C or higher, and its own refractive index is 1.4 to 1.6. In the case in which the melting point is lower than -50°C, the additive may be volatile at room temperature or be boiled at a low temperature, and in the case in which the melting point is higher than 50°C, the additive may be present as a solid crystal at room temperature. In the case in which the boiling point is lower than 300°C, room temperature vapor pressure of the additive is high and the additive may be thermally unstable during a manufacturing process of the film, and in the case in which the boiling points is higher than 600°C, the performance as a plasticizer, optical functions, productability of the film may be reduced, process equipments may be easily contaminated. Therefore, the boiling point is preferably 300 to 600°C. Further, in the case in which the refractive index is lower than 1.4 or higher than 1.6, since a difference in own refractive index with the refractive index of the cellulose acylate film, that is, about 1. 48 is increased, such that the light scattering is generated and the haze is not effectively decreased. The refractive index mean a physical property measured using a refractometer (model name: 1T, Japan, ATAGO ABBE) at a wavelength of 589.3nm (Na-D ray) by a photorefractive critical angle detecting method.

In addition, the molecular weight (Mw) may be preferably in a range of 200 to 1000 in which the additive may be physico-chemically stable and effectively reduce the haze. In the case of a low molecular weight additive having a molecular weight lower than 200, it is not easy to be handled in a manufacturing process or may be chemically decomposed, and in the case of a high molecular weight additive having a molecular weight higher than 1000, compatibility with a solvent and cellulose acylate may be reduced due to high viscosity and fluidity may be low, it may be difficult to effectively reduce the haze.

More specifically, the additive may be the compound satisfying the following Chemical Formula 1.

[Chemical Formula 1]

$R_1\text{-}(R_3)_a\text{-}L_1\text{-}(R_5)_b\text{-}(L_2)_c\text{-}(R_4)_d\text{-}R_2$

In Chemical Formula, $R_1$ is selected from (C1-C50)alkyl, (C6-C20)aryl, (C3-C20)cycloalkyl, (C2-C7)alkenyl, (C6-C20)aryl(C1-C20)alkyl, (C1-C50)heteroalkyl containing at least one atom selected from N, O, and S, 5- through 7-membered - heterocycloalkyl containing at least one atom selected from N, O, and S, and (C4-C20)heteroaryl containing at least one atom selected from N, O, and S,

$L_1$ and $L_2$ are each independently a connecting group selected from ester, amide, ether, urea, thioester, carboxyl, and carbamate,

$R_2$ is selected from (C1-C50)alkyl, (C6-C20)aryl, (C3-C20)cycloalkyl, (C2-C7)alkenyl, (C6-C20)aryl(C1-C20) alkyl, (C1-C50)heteroalkyl containing at least one atom selected from N, O, and S, 5- through 7-membered -heterocycloalkyl containing at least one atom selected from N, O, and S, and (C4-C20)heteroaryl containing at least one atom selected from N, O, and S,

$R_3$, $R_4$, and $R_5$ are each independently selected from (C1-C50)alkylene, (C6-C20)arylene, (C1-C50)heteroalkylene containing at least one atom selected from N, O, and S, and (C4-C20)heteroarylene containing at least one atom selected from N, O, and S,

alkyl, aryl, cycloalkyl, alkenyl, arylalkyl, heteroalkyl, heterocycloalkyl, and heteroaryl of $R_1$, $R_2$, $R_3$, $R_4$, and $R_5$ may be further substituted with (C1-C50)alkyl, (C6-C20)aryl, (C3-C20)cycloalkyl, (C2-C7)alkenyl, (C6-C20)aryl(C1-C20) alkyl, (C1-C50)heteroalkyl containing at least one atom selected from N, O, and S, 5- through 7- membered - heterocycloalkyl containing at least one atom selected from N, O, and S, and (C4-C20)heteroaryl containing at least one atom

selected from N, O, and S, and

a, b, c, and d are each independently 0 or 1.

More specifically, the compound of Chemical Formula 1 may be represented by the following Chemical Formula 2.

[Chemical Formula 2]

$R_1$-$L_1$-$R_2$

In Chemical Formula, $R_1$ is selected from (C1-C20)alkyl, (C6-C20)aryl, (C1-C20)heteroalkyl containing at least one atom selected from N, O, and S, and (C4-C20)heteroaryl containing at least one atom selected from N, O, and S,

$L_1$ is a connecting group selected from ester, amide, ether, urea, thioester, carboxyl, and carbamate,

$R_2$ is selected from (C1-C20)alkyl, (C6-C20)aryl, (C1-C50)heteroalkyl containing at least one atom selected from N, O, and S, and (C4-C20)heteroaryl containing at least one atom selected from N, O, and S, and

alkyl, aryl, heteroalkyl, and heteroaryl of $R_1$, and $R_2$ may be further substituted with (C1-C50)alkyl, (C6-C20) aryl, (C3-C20)cycloalkyl, (C2-C7)alkenyl, (C6-C20)aryl(C1-C20)alkyl, (C1-C50)heteroalkyl containing at least one atom selected from N, O, and S, 5- through 7-membered -heterocycloalkyl containing at least one atom selected from N, O, and S, and (C4-C20)heteroaryl containing at least one atom selected from N, O, and S.

More specifically, the compound of Chemical Formula 2 may be selected from the compounds of Chemical Formula 2-1.

[Chemical Formula 2-1]

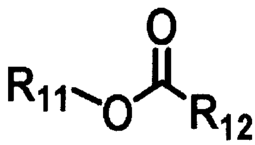

In Chemical Formula, $R_{11}$ is (C1-C15) alkyl, and $R_{12}$ is (C1-C15)alkyl.

A specific example of the compound of Chemical Formula 2-1 includes the following compound, but is not limited thereto.

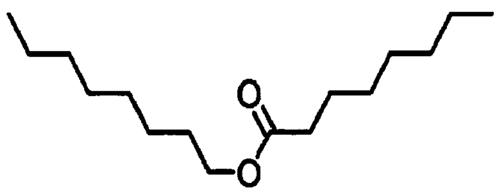

In addition, the compound of Chemical Formula 1 may be represented by the,following Chemical Formula 3.

[Chemical Formula 3]

$R_1$-$R_3$-$L_1$-$R_2$

In Chemical Formula, $R_1$ is selected from (C1-C20)alkyl, (C6-C20)aryl, (C1-C20)heteroalkyl containing at least one atom selected from N, O, and S, and (C4-C20)heteroaryl containing at least one atom selected from N, O, and S,

$L_1$ is a connecting group selected from ester, amide, ether, urea, thioester, carboxyl, and carbamate,

$R_2$ is selected from (C1-C20)alkyl, (C6-C20)aryl, (Cl-C50)heteroalkyl containing at least one atom selected from N, O, and S, and (C4-C20)heteroaryl containing at least one atom selected from N, O, and S,

$R_3$ is selected from (C1-C20)alkylene, (C6-C20)arylene, (C1-C20)heteroalkylene containing at least one atom selected from N, O, and S, and (C4-C20)heteroarylene containing at least one atom selected from N, O, and S, and

alkyl, aryl, heteroalkyl , and heteroaryl of $R_1$, $R_2$, and $R_3$ may be further substituted with (C1-C50)alkyl, (C6-C20)aryl, (C3-C20)cycloalkyl, (C2-C7)alkenyl, (C6-C20)aryl(C1-C20)alkyl, (C1-C50)heteroalkyl containing at least one atom selected from N, O, and S, 5- through 7-membered -heterocycloalkyl containing at least one atom selected from N, O, and S, and (C4-C20)heteroaryl containing at least one atom selected from N, O, and S.

More specifically, the compound of Chemical Formula 3 may be selected from the compounds of Chemical Formula 3-1.

[Chemical Formula 3-1]

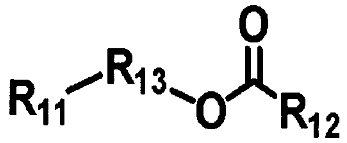

In Chemical Formula, $R_{11}$ is (C1-C15)alkyl, $R_{12}$ is (C1-C15)alkyl, $R_{13}$ is $-(OCH_2CH_2)_n-$, wherein n is an integer selected from 1 to 4.

In addition, the compound of Chemical Formula 1 may be represented by the following Chemical Formula 4.

[Chemical Formula 4]

$R_1$-$L_1$-$R_4$-$R_2$

In Chemical Formula, $R_1$ is selected from (C1-C20)alkyl, (C6-C20)aryl, (C1-C20)heteroalkyl containing at least one atom selected from N, O, and S, and (C4-C20)heteroaryl containing at least one atom selected from N, O, and S,

$L_1$ is a connecting group selected from ester, amide, ether, urea, thioester, carboxyl, and carbamate,

$R_2$ is selected from (C1-C20)alkyl, (C6-C20)aryl, (C1-C50)heteroalkyl containing at least one atom selected from N, O, and S, and (C4-C20)heteroaryl containing at least one atom selected from N, O, and S,

$R_4$ is selected from (C1-C20)alkylene, (C6-C20)arylene, (C1-C20)heteroalkylene containing at least one atom selected from N, O, and S, and (C4-C20)heteroarylene containing at least one atom selected from N, O, and S, and

Alkyl, aryl, heteroalkyl, and heteroaryl of $R_1$, $R_2$, and $R_4$ may be further substituted with (C1-C50)alkyl, (C6-C20)aryl, (C3-C20)cycloalkyl, (C2-C7)alkenyl, (C6-C20)aryl(C1-C20)alkyl, (C1-C50)heteroalkyl containing at least one atom selected from N, O, and S, 5- through 7-membered- heterocycloalkyl containing at least one atom selected from N, O, and S, and (C4-C20)heteroaryl containing at least one atom selected from N, O, and S.

More specifically, the compound of Chemical Formula 4 may be selected from the compounds of Chemical Formula 4-1.

[Chemical Formula 4-1]

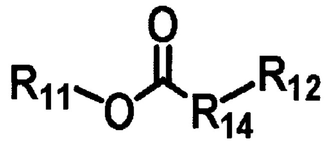

In Chemical Formula, $R_{11}$ is (C1-C15)alkyl, $R_{12}$ is (C1-C15) alkyl, $R_{14}$ is $-(CH_2CH_2O)_n-$, wherein n is an integer selected from 1 to 4.

In addition, the compound of Chemical Formula 1 may be represented by the following Chemical Formula 5.

[Chemical Formula 5]

$R_1$-$R_3$-$L_1$-$R_4$-$R_2$

In Chemical Formula, $R_1$ is selected from (C1-C20)alkyl, (C6-C20)aryl, (C1-C20)heteroalkyl containing at least one atom selected from N, O, and S, and (C4-C20)heteroaryl containing at least one atom selected from N, O, and S,

$L_1$ is a connecting group selected from ester, amide, ether, urea, thioester, carboxyl, and carbamate,

$R_2$ is selected from (C1-C20)alkyl, (C6-C20)aryl, (C1-C50)heteroalkyl containing at least one atom selected from N, O, and S, and (C4-C20)heteroaryl containing at least one atom selected from N, O, and S,

$R_3$ and $R_4$ are each independently selected from (C1-C20)alkylene, (C6-C20)arylene, (C1-C20)heteroalkylene containing at least one atom selected from N, O, and S, and (C4-C20)heteroarylene containing at least one atom selected from N, O, and S, and

alkyl, aryl, heteroalkyl, and heteroaryl of $R_1$, $R_2$, $R_3$ and $R_4$ may be further substituted with (C1-C50)alkyl, (C6-C20)aryl, (C3-C20)cycloalkyl, (C2-C7)alkenyl, (C6-C20)aryl(C1-C20)alkyl, (C1-C50)heteroalkyl containing at least one atom selected from N, O, and S, 5- through 7- membered - heterocycloalkyl containing at least one atom selected from N, O, and S, and (C4-C20)heteroaryl containing at least one atom selected from N, O, and S.

More specifically, the compound of Chemical Formula 5 may be selected from the compounds of Chemical Formula 5-1.

[Chemical Formula 5-1]

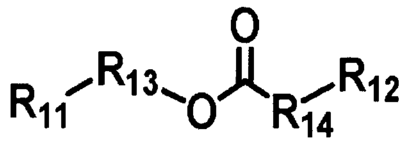

In Chemical Formula, $R_{11}$ is selected from (C1-C15)alkyl and (C6-C20)aryl, $R_{12}$ is selected from (C1-C15)alkyl and (C6-C20)aryl, $R_{13}$ is (C1-C20)alkylene or - $(OCH_2CH_2)_n$-, $R_{14}$ is (C1-C20)alkylene or - $(CH_2CH_2O)_n$-, n is an integer selected from 1 to 4, and aryl of $R_{11}$ and $R_{12}$ may be further substituted with (C1-C20)alkyl or (C1-C20)heteroalkyl containing at least one atom selected from N, O, and S.

A specific example of the compound of Chemical Formula 5-1 includes the following compound, but is not limited thereto.

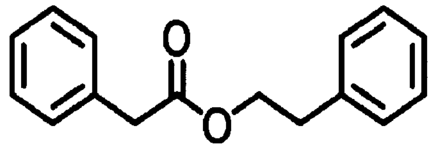

In addition, the compound of Chemical Formula 1 may be represented by the following Chemical Formula 6.

[Chemical Formula 6]

$R_1$-$L_1$-$R_5$-$L_2$-$R_2$

In Chemical Formula, $R_1$ is selected from (C1-C20)alkyl, (C6-C20)aryl, (C1-C20)heteroalkyl containing at least one atom selected from N, O, and S, and (C4-C20)heteroaryl containing at least one atom selected from N, O, and S,

$L_1$ and $L_2$ are each independently a connecting group selected from ester, amide, ether, urea, thioester, carboxyl, and carbamate,

$R_2$ is selected from (C1-C20)alkyl, (C6-C20)aryl, (C1-C50)heteroalkyl containing at least one atom selected from N, O, and S, and (C4-C20)heteroaryl containing at least one atom selected from N, O, and S,

$R_5$ is selected from (Cl-C20)alkylene, (C6-C20)arylene, (C1-C20)heteroalkylene containing at least one atom selected from N, O, and S, and (C4-C20)heteroarylene containing at least one atom selected from N, O, and S, and

alkyl, aryl, heteroalkyl , and heteroaryl of $R_1$, $R_2$, and $R_5$ may be further substituted with (C1-C50) alkyl, (C6-C20)aryl, (C3-C20)cycloalkyl, (C2-C7)alkenyl, (C6-C20)aryl(C1-C20)alkyl, (C1-C50)heteroalkyl containing at least one atom selected from N, O, and S, 5- through 7-membered -heterocycloalkyl containing at least one atom selected from N, O, and S, and (C4-C20)heteroaryl containing at least one atom selected from N, O, and S.

More specifically, the compound of Chemical Formula 6 may be selected from the compounds of Chemical Formula 6-1.

[Chemical Formula 6-1]

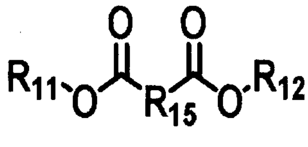

In Chemical Formula 6-1, $R_{11}$ is (C1-C15)alkyl, $R_{12}$ is (C1-C15)alkyl, and $R_{15}$ is (C1-C20)alkylene.

In addition, the compound of Chemical Formula 1 may be represented by the following Chemical Formula 7.

[Chemical Formula 7]

$R_1$-$R_3$-$L_1$-$R_5$-$L_2$-$R_4$-$R_2$

In Chemical Formula, $R_1$ is selected from (C1-C20)alkyl, (C6-C20)aryl, (C1-C20)heteroalkyl containing at least one atom selected from N, O, and S, and (C4-C20)heteroaryl containing at least one atom selected from N, O, and S,

$L_1$ and $L_2$ are each independently a connecting group selected from ester, amide, ether, urea, thioester, carboxyl, and carbamate,

$R_2$ is selected from (C1-C20)alkyl, (C6-C20)aryl, (C1-C50)heteroalkyl containing at least one atom selected from N, O, and S, and (C4-C20)heteroaryl containing at least one atom selected from N, O, and S,

$R_3$, $R_4$, and $R_5$ are selected from (C1-C20)alkylene, (C6-C20)arylene, (C1-C20)heteroalkylene containing at least one atom selected from N, O, and S, and (C4-C20)heteroarylene containing at least one atom selected from N, O, and S, and

alkyl, aryl, heteroalkyl, and heteroaryl of $R_1$, $R_2$, $R_3$, $R_4$, and $R_5$ may be further substituted with (C1-C50)alkyl, (C6-C20)aryl, (C3-C20)cycloalkyl, (C2-C7)alkenyl, (C6-C20)aryl(C1-C20)alkyl, (C1-C50)heteroalkyl containing at least one atom selected from N, O, and S, 5- through 7- membered - heterocycloalkyl containing at least one atom selected from N, O, and S, and (C4-C20)heteroaryl containing at least one atom selected from N, O, and S.

More specifically, the compound of Chemical Formula 7 may be selected from the compounds of Chemical Formulas 7-1 to 7-6.

[Chemical Formula 7-1]

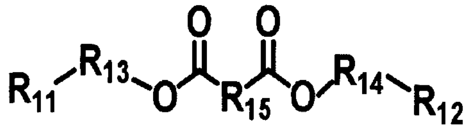

[Chemical Formula 7-2]

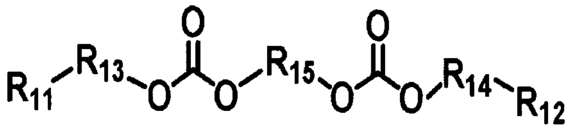

[Chemical Formula 7-3]

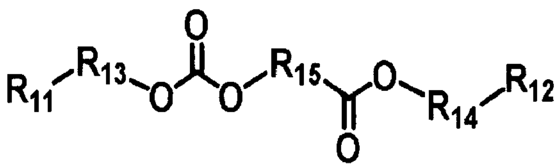

[Chemical Formula 7-4]

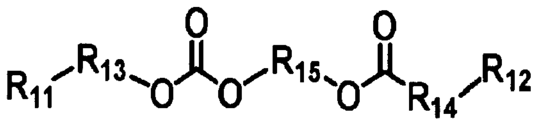

[Chemical Formula 7-5]

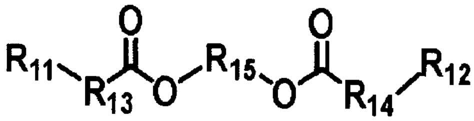

[Chemical Formula 7-6]

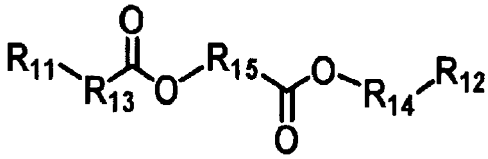

In Chemical Formulas, $R_{11}$ is (C1-C15)alkyl, $R_{12}$ is (C1-C15)alkyl, $R_{13}$ is (C1-C20)alkylene or - $(OCH_2CH_2)_n$-, $R_{14}$ is (C1-C20)alkylene or $(CH_2CH_2O)_n$-, wherein n is an integer selected from 1 to 4. In addition, $R_{15}$ is (C1-C20) alkylene, (C6-C20) arylene, or -$(CH_2CH_2O)_mCH_2CH_2$-, wherein m is an integer selected from 1 to 3.

A specific example of the compound of Chemical Formula 7-6 includes the following compound, but is not limited thereto.

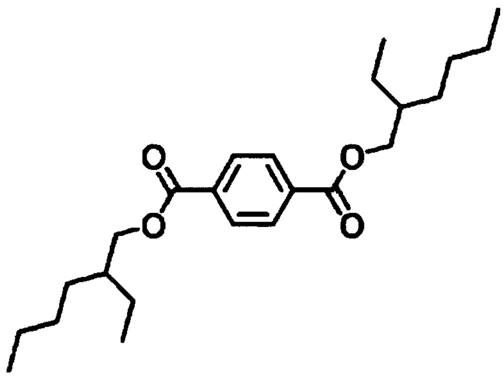

The terms "alkyl", "alkoxy" and other substituents including an "alkyl" part described in the present invention include both of the straight chain type and the branched chain type.

The term "aryl" described herein is an organic radical derived from aromatic hydrocarbon by the removal of one hydrogen atom, and may include a single ring or a fused ring containing, properly 4 to 7 ring atoms, and preferably 5 or 6 ring atoms. A specific example of aryl includes phenyl, naphthyl, biphenyl, tolyl, and the like, but is not limited thereto.

The term "heteroaryl" means an aryl group including 1 to 3 heteroatoms selected among N, O, or S as aromatic ring structure atoms, wherein the other aromatic ring structure atoms is carbon. The hetero aryl group includes, for example, a divalent aryl group forming N-oxide or quaternary salt by oxidizing or quartering heteroatoms in the ring. A specific example includes furyl, thiophenyl, pyrrolyl, pyranyl, imidazolyl, pyrazolyl, thiazolyl, thiadiazolyl, isothiazolyl, isoxazolyl, oxazolyl, oxadiazolyl, triazinyl, tetrazinyl, triazolyl, tetrazolyl, furazanyl, pyridyl, pyrazinyl, pyrimidinyl, pyridazinyl, or the like, but is not limited thereto.

The term "alkylene" described in the present invention means a divalent straight or branched saturated hydrocarbon radical configured of only carbon and hydrogen atoms. An example of alkylene radical includes methylene, ethylene, trimethylene, propylene, tetramethylene, pentamethylene, ethylethylene, or the like, but is not limited thereto.

The term "heteroalkylene" described in the present invention means a divalent straight or branched saturated hydrocarbon radical configured of only carbon and hydrogen atoms of which at least one atom is substituted with N, O, or S. For example, the "heteroalkylene" may include $-O-CH_2-$, $-O-CH_2-CH_2-$, or the like, but is not limited thereto.

More specifically, the compound of Chemical Formula 1 may be specified as the following compounds, but is not limited thereto.

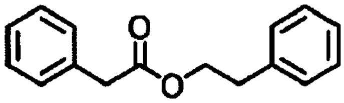

,

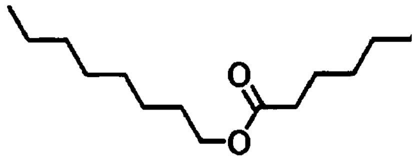

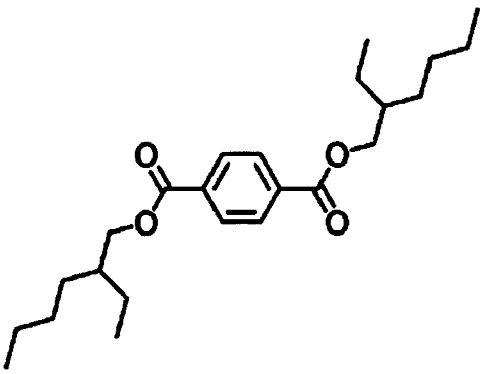

In addition, the cellulose acylate film according to the present invention may includes various additives, for example, a retardation regulator, a plasticizer, an UV inhibitor, a degradation inhibitor, a particulate matter, a stripping agent, an infrared absorber, an optical anisotropy controller, or the like, as needed. Any additive may be used without limitation as long as the additive is generally used in the art.

A specific kind of these additives is not particularly limited, but any additive may be used as long as the additive is generally used in the art, wherein a content thereof may be in a range in which the physical properties of the film is not deteriorated. A timing at which the additive is added is determined according to a kind of additive. A process of adding the additive may be preformed in a final step of dope preparation.

DETAILED DESCRIPTION OF EMBODIMENTS

Hereinafter, examples will be provided in order to describe the present invention in more detail. However, the present invention is not limited to Examples below.

Hereinafter, physical properties are measured by the following measuring method.

1) Haze

Haze is a value (%) measured using a haze meter (model name: HM-150, Japan, Murakami Color Research Lab.) according to JIS K 7136. After the haze meter is turned on and calibration is performed with a light amount of a lamp in the air, the measurement is performed. A cellulose acylate film manufactured to have a thickness of 60 to 80um was cut into 4x4cm to thereby be sampled, and a haze of the same sample was measured three times, and an average value was obtained.

2) Refractive index

The refractive index was measured using a refractometer (model name: 1T, Japan, ATAGO ABBE) and D line of sodium lamp (589.3nm) as a light source.

3) XRD analysis

The cellulose acylate film was stretched by 30 to 40% and then was loaded on an X-ray diffractometer (model name: XRD-7000S, Japan, SHIMADZU) to be measured. The result value of detecting signal intensity according to diffraction angle was compared with the value with respect to an organic material crystal in database, thereby determining whether the additive was crystallized or not.

[Example 1]

Preparation of Cellulose Acylate Composition (1)

5 parts by weight of phenylethyl 2-phenylacetate (melting point: 28°C(760mmHg), boiling point: 324°C

(760mmHg) , refractive index: 1.545 (20°C) ) of the following Chemical Formula 8, 440 parts by weight of methylene chloride, 50 parts by weight of methanol based on 100 parts by weight of cellulose acetate particles having a substitution degree of 2.87 were input into a stirrer and dissolved at 30°C. Then, the liquid was transferred to a gear pump, and was filtered through a filter having an absolute filtration precision of 0.01mm, and again, was filtered through a cartridge filtration device having an absolute filtration precision of 5μm.

[Chemical Formula 8]

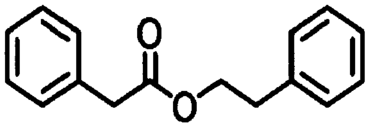

Manufacturing of Film

The composition (1) was casted over a mirror-surface stainless support and was stripped off detached. An amount of a residual solvent at the time of stripping was adjusted so as to be 25 wt%. After the film was connected to a tenter, the film was stretched by 10% in a width direction (% means % of length), and left and right distal ends of the film were removed by 150mm after the film was separated from the tenter. The film of which the distal ends were removed was dried by a drier, and both ends of the film separated from the drier were cut by 30mm. Again, a knurling process (width x height: 10mm x 68 μm) was performed on both ends of the film, and the film was wound in a roll shape.

The physical property of the manufactured film was shown in Table 1.

[Example 2]

Preparation of Cellulose Acylate Composition (2)

5 parts by weight of octyl octanoate (melting point: -18°C(760mmHg), boiling point: 306°C(760mmHg), refractive index: 1.435(20°C)) of the following Chemical Formula 9, 440 parts by weight of methylene chloride, and 50 parts by weight of methanol based on 100 parts by weight of cellulose acetate particles having a substitution degree of 2.87 were input into a stirrer and dissolved at 30°C. Then, the liquid was transferred to a gear pump, and was filtered through a filter having an absolute filtration precision of 0.01mm, and again, was filtered through a cartridge filtration device having an absolute filtration precision of 5 μm.

[Chemical Formula 9]

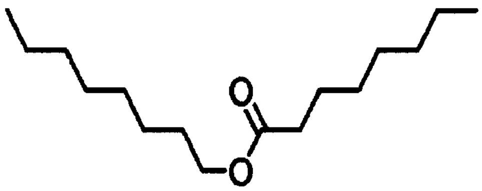

Manufacturing of Film

The composition (2) was casted over a mirror-surface stainless support and was stripped off detached. An amount of a residual solvent at the time of stripping was adjusted so as to be 25 wt%. After the film was connected to a tenter, the film was stretched by 10% in a width direction (% means % of length), and left and right distal ends of the film were removed by 150mm after the film was separated from the tenter. The film of which the distal ends were removed was dried by a drier, and both ends of the film separated from the drier were cut by 30mm. Again, a knurling process (width x height: 10mm x 68 μm) was performed on both ends of the film, and the film was wound in a roll shape.

The physical property of the manufactured film was shown in Table 1.

[Example 3]

Preparation of Cellulose Acylate Composition (3)

5 parts by weight of bis (2-ethylhexyl)telephthalate (melting point: 30°C(760mmHg), boiling point: 400°C(760mmHg), refractive index: 1.49(20°C)) of the following Chemical Formula 10, 440 parts by weight of methylene chloride, and 50 parts by weight of methanol based on 100 parts by weight of cellulose acetate particles having a substitution degree of 2.87 were input into a stirrer and dissolved at 30°C. Then, the liquid was transferred to a gear pump, and was filtered through a filter having an absolute filtration precision of 0.01mm, and again, was filtered through

a cartridge filtration device having an absolute filtration precision of 5 μm.

[Chemical Formula 10]

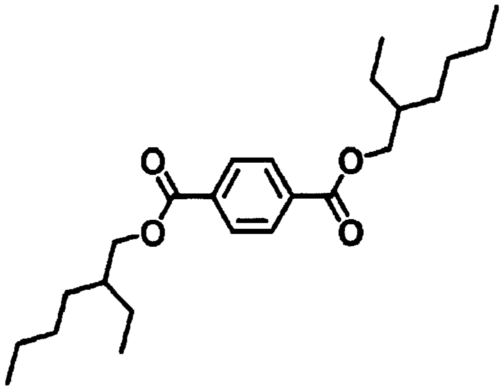

Manufacturing of Film

The composition (3) was casted over a mirror-surface stainless support and was stripped off detached. An amount of a residual solvent at the time of stripping was adjusted so as to be 25 wt%. After the film was connected to a tenter, the film was stretched by 10% in a width direction (% means % of length), and left and right distal ends of the film were removed by 150mm after the film was separated from the tenter. The film of which the distal ends were removed was dried by a drier, and both ends of the film separated from the drier were cut by 30mm. Again, a knurling process (width x height: 10mm x 68 μm) was performed on both ends of the film, and the film was wound in a roll shape.

The physical property of the manufactured film was shown in Table 1.

[Example 4]

Preparation of Cellulose Acylate Composition (4)

7 parts by weight of bis(2-ethylhexyl)telephthalate (melting point: 30°C(760mmHg), boiling point: 400°C(760mmHg), refractive index: 1.49(20°C)) of the following Chemical Formula 10, 440 parts by weight of methylene chloride, and 50 parts by weight of methanol based on 100 parts by weight of cellulose acetate particles having a substitution degree of 2.87 were input into a stirrer and dissolved at 30°C. Then, the liquid was transferred to a gear pump, and was filtered through a filter having an absolute filtration precision of 0.01mm, and again, was filtered through a cartridge filtration device having an absolute filtration precision of 5μm.

[Chemical Formula 10]

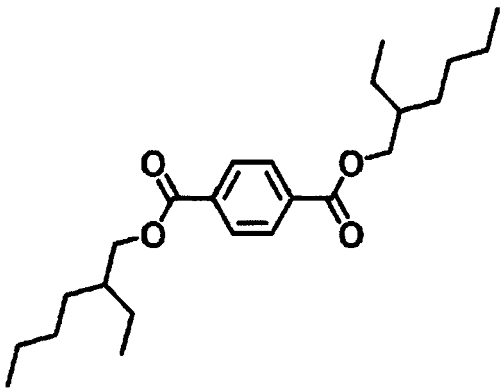

Manufacturing of Film

The composition (4) was casted over a mirror-surface stainless support and was stripped off detached. An amount of a residual solvent at the time of stripping was adjusted so as to be 25 wt%. After the film was connected to a tenter, the film was stretched by 10% in a width direction (% means % of length), and left and right distal ends of the film were removed by 150mm after the film was separated from the tenter. The film of which the distal ends were removed

was dried by a drier, and both ends of the film separated from the drier were cut by 30mm. Again, a knurling process (width x height: 10mm x 68 μm) was performed on both ends of the film, and the film was wound in a roll shape.

The physical property of the manufactured film was shown in Table 1.

[Example 5]

Preparation of Cellulose Acylate Composition (5)

10 parts by weight of bis (2-ethylhexyl)telephthalate (melting point: 30°C(760mmHg), boiling point: 400°C(760mmHg), refractive index: 1.49(20°C)) of the following Chemical Formula 10, 440 parts by weight of methylene chloride, and 50 parts by weight of methanol based on 100 parts by weight of cellulose acetate particles having a substitution degree of 2.87 were input into a stirrer and dissolved at 30°C. Then, the liquid was transferred to a gear pump, and was filtered through a filter having an absolute filtration precision of 0.01mm, and again, was filtered through a cartridge filtration device having an absolute filtration precision of 5 μm.

[Chemical Formula 10]

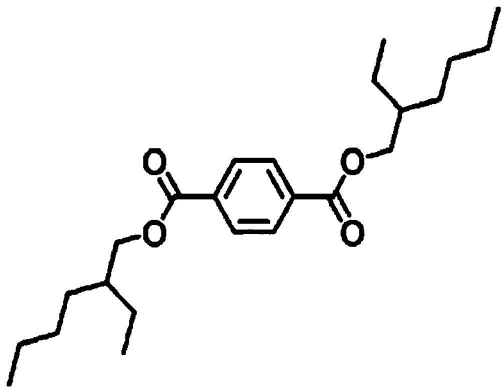

Manufacturing of Film

The composition (5) was casted over a mirror-surface stainless support and was stripped off detached. An amount of a residual solvent at the time of stripping was adjusted so as to be 25 wt%. After the film was connected to a tenter, the film was stretched by 10% in a width direction (% means % of length), and left and right distal ends of the film were removed by 150mm after the film was separated from the tenter. The film of which the distal ends were removed was dried by a drier, and both ends of the film separated from the drier were cut by 30mm. Again, a knurling process (width x height: 10mm x 68 μm) was performed on both ends of the film, and the film was wound in a roll shape.

The physical property of the manufactured film was shown in Table 1.

[Comparative example 1]

Preparation of Cellulose Acylate Composition (6)

5 parts by weight of triphenylphosphate (melting point: 48°C(760mmHg), boiling point: 244°C (10mmHg)), 440 parts by weight of methylene chloride, and 50 parts by weight of methanol based on 100 parts by weight of cellulose acetate particles having a substitution degree of 2.87 were input into a stirrer and dissolved at 30°C. Then, the liquid was transferred to a gear pump, and was filtered through a filter having an absolute filtration precision of 0.01mm, and again, was filtered through a cartridge filtration device having an absolute filtration precision of 5 μm.

Manufacturing of Film

The composition (6) was casted over a mirror-surface stainless support and was stripped off detached. An amount of a residual solvent at the time of stripping was adjusted so as to be 25 wt%. After the film was connected to a tenter, the film was stretched by 10% in a width direction (% means % of length), and left and right distal ends of the film were removed by 150mm after the film was separated from the tenter. The film of which the distal ends were removed was dried by a drier, and both ends of the film separated from the drier were cut by 30mm. Again, a knurling process (width x height: 10mm x 68 μm) was performed on both ends of the film, and the film was wound in a roll shape.

The physical property of the manufactured film was shown in Table 1.

[Comparative example 2]

Preparation of Cellulose Acylate Composition (7)

10 parts by weight of triphenylphosphate, 440 parts by weight of methylene chloride, and 50 parts by weight of methanol based on 100 parts by weight of cellulose acetate particles having a substitution degree of 2.87 were input into a stirrer and dissolved at 30°C. Then, the liquid was transferred to a gear pump, and was filtered through a filter having an absolute filtration precision of 0.01mm, and again, was filtered through a cartridge filtration device having an absolute filtration precision of 5 μm.

Manufacturing of Film

The composition (7) was casted over a mirror-surface stainless support and was stripped off detached. An amount of a residual solvent at the time of stripping was adjusted so as to be 25 wt%. After the film was connected to a tenter, the film was stretched by 10% in a width direction (% means % of length), and left and right distal ends of the film were removed by 150mm after the film was separated from the tenter. The film of which the distal ends were removed was dried by a drier, and both ends of the film separated from the drier were cut by 30mm. Again, a knurling process (width x height: 10mm x 68 μm) was performed on both ends of the film, and the film was wound in a roll shape.

The physical property of the manufactured film was shown in Table 1.

[Table 1]

| | Haze before stretching (%) | Haze after stretching (%) | whether a crystalline peak is present or not (result of XRD analysis) |
|---|---|---|---|
| Example 1 | 0.2 | 0.3 | No |
| Example 2 | 0.2 | 0.3 | No |
| Example 3 | 0.2 | 0.2 | No |
| Example4 | 0.2 | 0.1 | No |
| Example 5 | 0.2 | 0.1 | No |
| Comparative Example 1 | 0.2 | 0.5 | Yes |
| Comparative Example 2 | 0.2 | 3.5 | Yes |

As shown in Table 1, it may be appreciated that the haze of the additive according to the present invention is not significantly increased after stretching. Particularly, in the case of Example 3, the haze was not increased after stretching, the cases of Examples 4 and 5, the haze was decreased, and as a result of the XRD analysis, the crystalline peak did not appear.

Comparably, in the case of Comparative Examples 1 and 2 using triphenylphosphate powders, it was confirmed that the haze of the film was significantly increased after stretching and the crystalline peak was shown as a result of the XRD analysis.

As set forth above, in the cellulose acylate film according to the present invention, the additive being a liquid state at room temperature and having a melting point of -50 to 50°C, a boiling point of 300°C or more, and its own refractive index of 1.4 to 1.6 is added thereto, and more particularly, the additive represented by Chemical Formulas 1 to 7 is added thereto, such that the additive is easily dissolved in cellulose acylate due to its own fluidity and compatibility, has a low light scattering efficiency (haze) due to the refractive index similar to that of the cellulose acylate, and is not crystallized after stretching, thereby making it possible to suppress the light scattering efficiency (haze) of the cellulose acylate film from being increased.

**Claims**

1. A cellulose acylate film containing an additive being a liquid state at room temperature and having a melting point of -50 to 50°C, a boiling point of 300°C or higher, and its own refractive index of 1.4 to 1.6.

2. The cellulose acylate film of claim 1, wherein it has a haze satisfying the following Equation 1 before stretching and a haze satisfying the following Equation 2 after stretching by 10 to 30%, and a difference between the haze before stretching and the haze after stretching may satisfying the following Equation 3.

[Equation 1]

$$\text{The haze of the film before stretching } (Hi) \leq 0.3\%$$

[Equation 2]

The haze of the film after stretching by 10 to 30% (Hs) $\leq$ 0.3%

[Equation 3]

$$Hs = Hi \pm (0.001 \sim 0.2\ \%)$$

In the equation, Hs is the haze after stretching by 10 to 30%, and Hi is the haze before stretching.

**3.** The cellulose acylate film of claim 1, wherein the additive is selected from compounds of Chemical Formula 1.

[Chemical Formula 1] $R_1$- $(R_3)_a$-$L_1$ $(R_5)_b$- $(L_2)_c$- $(R_9)_d$-$R_2$

In Chemical Formular, $R_1$ is selected from (C1-C50)alkyl, (C6-C20)aryl, (C3-C20)cycloalkyl, (C2-C7)alkenyl, (C6-C20)aryl(C1-C20)alkyl, (C1-C50)heteroalkyl containing at least one atom selected from N, O, and S, 5- through 7-membered - heterocycloalkyl containing at least one atom selected from N, O, and S, and (C4-C20)heteroaryl containing at least one atom selected from N, O, and S,
$L_1$ and $L_2$ are each independently a connecting group selected from ester, amide, ether, urea, thioester, carboxyl, and carbamate,
$R_2$ is selected from (C1-C50)alkyl, (C6-C20)aryl, (C3-C20)cycloalkyl, (C2-C7)alkenyl, (C6-C20)aryl(C1-C20)alkyl, (C1-C50)heteroalkyl containing at least one atom selected from N, O, and S, 5- through 7- membered - heterocycloalkyl containing at least one atom selected from N, O, and S, and (C4-C20)heteroaryl containing at least one atom selected from N, O, and S,
$R_3$, $R_4$, and $R_5$ are each independently selected from (C1-C50)alkylene, (C6-C20)arylene, (C1-C50)heteroalkylene containing at least one atom selected from N, O, and S, and (C4-C20)heteroarylene containing at least one atom selected from N, O, and S,
alkyl, aryl, cycloalkyl, alkenyl, arylalkyl, heteroalkyl, heterocycloalkyl, and heteroaryl of $R_1$, $R_2$, $R_3$, $R_4$, and $R_5$ are further substituted with (C1-C50)alkyl, (C6-C20)aryl, (C3-C20)cycloalkyl, (C2-C7)alkenyl, (C6-C20)aryl(C1-C20)alkyl, (C1-C50)heteroalkyl containing at least one atom selected from N, O, and S, 5- through 7-membered -heterocycloalkyl containing at least one atom selected from N, O, and S, and (C4-C20)heteroaryl containing at least one atom selected from N, O, and S, and
a, b, c, and d are each independently 0 or 1.

**4.** The cellulose acylate film of claim 3, wherein the compound of Chemical Formula 1 is selected form compounds of Chemical Formula 2.

[Chemical Formula 2] $R_1$-$L_1$-$R_2$

In Chemical Formula, $R_1$ is selected from (C1-C20)alkyl, (C6-C20)aryl, (C1-C20)heteroalkyl containing at least one atom selected from N, O, and S, and (C4-C20)heteroaryl containing at least one atom selected from N, O, and S,
$L_1$ is a connecting group selected from ester, amide, ether, urea, thioester, carboxyl, and carbamate,
$R_2$ is selected from (C1-C20)alkyl, (C6-C20)aryl, (C1-C50)heteroalkyl containing at least one atom selected from N, O, and S, and (C4-C20)heteroaryl containing at least one atom selected from N, O, and S, and,
alkyl, aryl, heteroalkyl, and heteroaryl of $R_1$, and $R_2$ are further substituted with (C1-C50)alkyl, (C6-C20)aryl, (C3-C20)cycloalkyl, (C2-C7)alkenyl, (C6-C20)aryl(C1-C20)alkyl, (C1-C50)heteroalkyl containing at least one atom selected from N, O, and S, 5- through 7-membered -heterocycloalkyl containing at least one atom selected from N, O, and S, and (C4-C20)heteroaryl containing at least one atom selected from N, O, and S.

**5.** The cellulose acylate film of claim 3, wherein the compound of Chemical Formula 1 is selected form compounds of Chemical Formula 3.

[Chemical Formula 3] $R_1$-$R_3$-$L_1$-$R_2$

In Chemical Formula, $R_1$ is selected from (C1-C20)alkyl, (C6-C20)aryl, (C1-C20)heteroalkyl containing at least one atom selected from N, O, and S, and (C4-C20)heteroaryl containing at least one atom selected from N, O, and S,
$L_1$ is a connecting group selected from ester, amide, ether, urea, thioester, carboxyl, and carbamate,
$R_2$ is selected from (C1-C20)alkyl, (C6-C20)aryl, (C1-C50)heteroalkyl containing at least one atom selected from N, O, and S, and (C4-C20)heteroaryl containing at least one atom selected from N, O, and S,
$R_3$ is selected from (C1-C20)alkylene, (C6-C20)arylene, (C1-C20)heteroalkylene containing at least one atom selected from N, O, and S, and (C4-C20)heteroarylene containing at least one atom selected from N, O, and S, and
alkyl, aryl, heteroalkyl, and heteroaryl of $R_1$, $R_2$, and $R_3$ are further substituted with (C1-C50)alkyl, (C6-C20)aryl, (C3-C20)cycloalkyl, (C2-C7)alkenyl, (C6-C20)aryl(C1-C20)alkyl, (C1-C50)heteroalkyl containing at least one atom selected from N, O, and S, 5- through 7-membered -heterocycloalkyl containing at least one atom selected from N, O, and S, and (C4-C20)heteroaryl containing at least one atom selected from N, O, and S.

**6.** The cellulose acylate film of claim 3, wherein the compound of Chemical Formula 1 is selected form compounds of Chemical Formula 4.

[Chemical Formula 4] $R_1$-$L_1$-$R_4$-$R_2$

In Chemical Formula, $R_1$ is selected from (C1-C20)alkyl, (C6-C20)aryl, (C1-C20)heteroalkyl containing at least one atom selected from N, O, and S, and (C4-C20)heteroaryl containing at least one atom selected from N, O, and S,
$L_1$ is a connecting group selected from ester, amide, ether, urea, thioester, carboxyl, and carbamate,
$R_2$ is selected from (C1-C20)alkyl, (C6-C20)aryl, (C1-C50)heteroalkyl containing at least one atom selected from N, O, and S, and (C4-C20)heteroaryl containing at least one atom selected from N, O, and S,
$R_4$ is selected from (C1-C20)alkylene, (C6-C20)arylene, (C1-C20)heteroalkylene containing at least one atom selected from N, O, and S, and (C4-C20)heteroarylene containing at least one atom selected from N, O, and S, and
alkyl, aryl, heteroalkyl, and heteroaryl of $R_1$, $R_2$, and $R_4$ are further substituted with (C1-C50)alkyl, (C6-C20)aryl, (C3-C20)cycloalkyl, (C2-C7)alkenyl, (C6-C20)aryl(C1-C20)alkyl, (C1-C50)heteroalkyl containing at least one atom selected from N, O, and S, 5- through 7-membered -heterocycloalkyl containing at least one atom selected from N, O, and S, and (C4-C20)heteroaryl containing at least one atom selected from N, O, and S.

**7.** The cellulose acylate film of claim 3, wherein the compound of Chemical Formula 1 is selected form compounds of Chemical Formula 5.

[Chemical Formula 5] $R_1$-$R_3$-$L_1$-$R_4$-$R_2$

In Chemical Formula, $R_1$ is selected from (C1-C20)alkyl, (C6-C20)aryl, (C1-C20)heteroalkyl containing at least one atom selected from N, O, and S, and (C4-C20)heteroaryl containing at least one atom selected from N, O, and S,
$L_1$ is a connecting group selected from ester, amide, ether, urea, thioester, carboxyl, and carbamate,
$R_2$ is selected from (C1-C20)alkyl, (C6-C20)aryl, (C1-C50)heteroalkyl containing at least one atom selected from N, O, and S, and (C4-C20)heteroaryl containing at least one atom selected from N, O, and S,
$R_3$ and $R_4$ are each independently selected from (C1-C20)alkylene, (C6-C20)arylene, (C1-C20)heteroalkylene containing at least one atom selected from N, O, and S, and (C4-C20)heteroarylene containing at least one atom selected from N, O, and S, and
alkyl, aryl, heteroalkyl, and heteroaryl of $R_1$, $R_2$, $R_3$, and $R_4$ are further substituted with (C1-C50)alkyl, (C6-C20) aryl, (C3-C20)cycloalkyl, (C2-C7)alkenyl, (C6-C20)aryl(C1-C20)alkyl, (C1-C50)heteroalkyl containing at least one atom selected from N, O, and S, 5- through 7-membered -heterocycloalkyl containing at least one atom selected from N, O, and S, and (C4-C20)heteroaryl containing at least one atom selected from N, O, and S.

**8.** The cellulose acylate film of claim 3, wherein the compound of Chemical Formula 1 is selected form compounds of Chemical Formula 6.

[Chemical Formula 6] $R_1$-$L_1$-$R_5$-$L_2$-$R_2$

In Chemical Formula, $R_1$ is selected from (C1-C20)alkyl, (C6-C20)aryl, (C1-C20)heteroalkyl containing at least one atom selected from N, O, and S, and (C4-C20)heteroaryl containing at least one atom selected from N, O, and S,
$L_1$ and $L_2$ are each independently a connecting group selected from ester, amide, ether, urea, thioester, carboxyl, and carbamate,
$R_2$ is selected from (C1-C20)alkyl, (C6-C20)aryl, (C1-C50)heteroalkyl containing at least one atom selected from

N, O, and S, and (C4-C20)heteroaryl containing at least one atom selected from N, O, and S,
$R_5$ is selected from (C1-C20)alkylene, (C6-C20)arylene, (C1-C20)heteroalkylene containing at least one atom selected from N, O, and S, and (C4-C20)heteroarylene containing at least one atom selected from N, O, and S, and
alkyl, aryl, heteroalkyl, and heteroaryl of $R_1$, $R_2$, and $R_5$ are further substituted with (C1-C50)alkyl, (C6-C20)aryl, (C3-C20)cycloalkyl, (C2-C7)alkenyl, (C6-C20)aryl(C1-C20)alkyl, (C1-C50)heteroalkyl containing at least one atom selected from N, O, and S, 5- through 7-membered -heterocycloalkyl containing at least one atom selected from N, O, and S, and (C4-C20)heteroaryl containing at least one atom selected from N, O, and S.

**9.** The cellulose acylate film of claim 3, wherein the compound of Chemical Formula 1 is selected form compounds of Chemical Formula 7.

[Chemical Formula 7] $R_1$-$R_3$-$L_1$-$R_5$-$L_2$-$R_4$-$R_2$

In Chemical Formula, $R_1$ is selected from (C1-C20)alkyl, (C6-C20)aryl, (C1-C20)heteroalkyl containing at least one atom selected from N, O, and S, and (C4-C20)heteroaryl containing at least one atom selected from N, O, and S,
$L_1$ and $L_2$ are each independently a connecting group selected from ester, amide, ether, urea, thioester, carboxyl, and carbamate,
$R_2$ is selected from (C1-C20)alkyl, (C6-C20)aryl, (C1-C50)heteroalkyl containing at least one atom selected from N, O, and S, and (C4-C20)heteroaryl containing at least one atom selected from N, O, and S,
$R_3$, $R_4$, and $R_5$ are selected from (C1-C20)alkylene, (C6-C20)arylene, (C1-C20)heteroalkylene containing at least one atom selected from N, O, and S, and (C4-C20)heteroarylene containing at least one atom selected from N, O, and S, and
alkyl, aryl, heteroalkyl, and heteroaryl of $R_1$, $R_2$, $R_3$, $R_4$, and $R_5$ are further substituted with (C1-C50)alkyl, (C6-C20) aryl, (C3-C20)cycloalkyl, (C2-C7)alkenyl, (C6-C20)aryl(C1-C20)alkyl, (C1-C50)heteroalkyl containing at least one atom selected from N, O, and S, 5- through 7-membered -heterocycloalkyl containing at least one atom selected from N, O, and S, and (C4-C20)heteroaryl containing at least one atom selected from N, O, and S.

**10.** The cellulose acylate film of claim 3, wherein the compound of Chemical Formula 1 is selected from the following compounds.

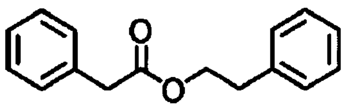
,
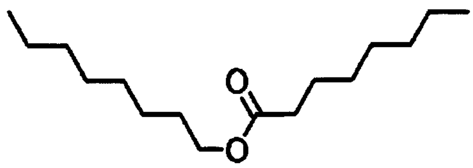

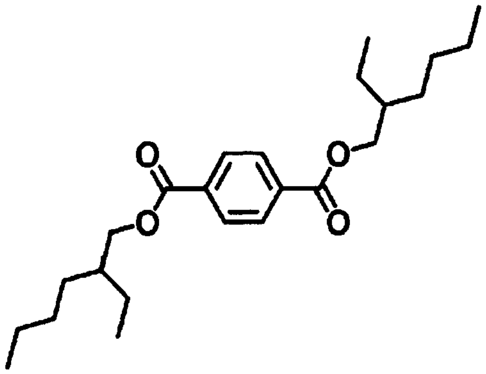

**11.** The cellulose acylate film of any one of claims 1 to 10, wherein a crystalline peak does not appear in the film as a result of X-ray diffraction (XRD) analysis.

**12.** A polarizer including the cellulose acylate film of any one of claims 1 to 10.

**13.** A liquid cystal display including the polarizer of claim 12.

Europäisches Patentamt
European Patent Office
Office européen des brevets

# EUROPEAN SEARCH REPORT

Application Number
EP 12 00 7496

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2010/005242 A2 (SK ENERGY CO LTD [KR]) 14 January 2010 (2010-01-14)<br>* paragraph [0005] - paragraph [0031] *<br>----- | 1-13 | INV.<br>C08J5/18<br>C08L1/12<br>C08K5/10<br><br>ADD.<br>G02B5/30<br>G02F1/1335 |
| X | WO 2011/031038 A2 (SK INNOVATION CO LTD [KR]) 17 March 2011 (2011-03-17)<br>* paragraph [0007] - paragraph [0027] *<br>----- | 1-13 | |
| X | US 2010/151156 A1 (KAWABE SATOMI [JP] ET AL) 17 June 2010 (2010-06-17)<br>* paragraph [0126] - paragraph [0127] *<br>* paragraph [0163] - paragraph [0179] *<br>----- | 1-13 | |
| | | | TECHNICAL FIELDS SEARCHED (IPC) |
| | | | C08J<br>C08L<br>G02B<br>G02F |

The present search report has been drawn up for all claims

1

| Place of search | Date of completion of the search | Examiner |
|---|---|---|
| The Hague | 14 January 2013 | Lichau, Holger |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT ON EUROPEAN PATENT APPLICATION NO. EP 12 00 7496

This annex lists the patent family members relating to the patent documents cited in the above-mentioned European search report.
The members are as contained in the European Patent Office EDP file on
The European Patent Office is in no way liable for these particulars which are merely given for the purpose of information.

14-01-2013

| Patent document cited in search report | Publication date | Patent family member(s) | Publication date |
|---|---|---|---|
| WO 2010005242 A2 | 14-01-2010 | EP 2297234 A2 | 23-03-2011 |
| | | JP 2011527761 A | 04-11-2011 |
| | | KR 20100006837 A | 22-01-2010 |
| | | TW 201006876 A | 16-02-2010 |
| | | US 2011108780 A1 | 12-05-2011 |
| | | WO 2010005242 A2 | 14-01-2010 |
| WO 2011031038 A2 | 17-03-2011 | CN 102574342 A | 11-07-2012 |
| | | EP 2475515 A2 | 18-07-2012 |
| | | KR 20110026616 A | 16-03-2011 |
| | | US 2012171392 A1 | 05-07-2012 |
| | | WO 2011031038 A2 | 17-03-2011 |
| US 2010151156 A1 | 17-06-2010 | CN 101277997 A | 01-10-2008 |
| | | KR 20080055879 A | 19-06-2008 |
| | | US 2010151156 A1 | 17-06-2010 |
| | | WO 2007043358 A1 | 19-04-2007 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- KR 1020110115556
- JP 2008213469 A